# EUROPEAN PATENT APPLICATION

(11) **EP 3 279 085 A1**
(43) Date of publication of application: **07.02.2018**
(21) Application number: 16182695.3
(22) Date of filing: 04.08.2016
(51) Int. Cl.: B64C 25/60

(54) **AIRCRAFT LANDING GEAR SHOCK ABSORBER STRUT**

(71) Applicant: Safran Landing Systems UK Ltd, Gloucester, Gloucestershire GL2 9QH (GB)
(72) Inventor: Simonneaux, Yann, Gloucestershire, GL2 9QH (GB)
(74) Representative: Latham, Stuart Alexander

(57) **Abstract**

An aircraft landing gear shock absorber strut (10) including: a casing (11) formed from titanium and including a wall portion defining a first bore (6) which is open at a first axial face of the casing; a non-titanium tubular sleeve (11a) fitted within the first bore, the tubular sleeve having a sleeve wall which defines a second bore that is open at the first axial face of the casing, the sleeve wall being thinner than the wall portion of the casing; a sliding tube (1) having a first end region defining a piston which is slidably housed within the second bore and a second end region which projects from the first axial face of the casing so that the sliding tube (1) can move axially relative to the casing between a compressed shock absorber condition and an extended shock absorber condition, the first end region of the sliding tube (1) defining a first bearing (12) having a first bearing surface arranged in sliding contact with the sleeve; and a second bearing (4) coupled to the casing within the first bore and having a second bearing surface arranged for sliding contact with the sliding tube, the second bearing being situated closer to the first axial face of the casing in comparison to the first bearing.

## Description

### Background of the Invention

Weight and corrosion resistance are important factors when designing an aircraft landing gear.

Titanium is a well-known aerospace material that is relatively light in weight in comparison to steel and is also resistant to corrosion in use. It is known, for example, to form the casing or "main fitting" of a main shock absorber strut from titanium because it is one of the heaviest parts of an aircraft landing gear.

It is know that if a metallic bearing is run against a bare titanium counter-face, the titanium counter-face is likely to suffer from wear caused by adhesion between the sliding surfaces. This is known in the art as "galling". It is therefore known to run a non-metallic bearing, such as a polymer bearing, against a bare titanium counter-face in order to reduce the likelihood of galling.

The present inventor has identified that aircraft landing gear shock absorber struts in which a non-metallic bearing is run against a bare titanium counter-face can result in premature wear in comparison to other solutions, thereby requiring an increased level of maintenance, repair and/or overhaul.

### Summary of the Invention

According to a first aspect of the present invention, there is provided an aircraft landing gear shock absorber strut including:
a casing formed from titanium and including a wall portion defining a first bore which is open at a first axial face of the casing;
a non-titanium tubular sleeve fitted within the first bore, the tubular sleeve having a sleeve wall which defines a second bore, the sleeve wall being thinner than the wall portion of the casing;
a sliding tube having a first end region defining a piston which is slidably housed within the second bore and a second end region which projects from the first axial face of the casing so that the sliding tube can move axially relative to the casing between a compressed shock absorber condition and an extended shock absorber condition, the first end region of the sliding tube defining a first bearing having a first bearing surface arranged in sliding contact with the sleeve; and
a second bearing coupled to the casing within the first bore and having a second bearing surface arranged for sliding contact with the sliding tube, the second bearing being situated closer to the first axial face of the casing in comparison to the first bearing.

Thus, the shock absorber strut according to the first aspect has a casing formed from titanium and a relatively thin, non-titanium sleeve which defines the counter face for the upper shock absorber bearing. The sleeve can therefore have improved wear resistance in comparison to titanium when run against a variety of bearing materials, especially metallic bearings. The present inventor surprisingly found that, although the use of a sleeve can increase the overall diameter of the casing, the additional weight is mitigated by the fact that the rest of the casing can be formed from titanium. Embodiments of the invention therefore provide an aircraft landing gear shock absorber strut which possesses the weight saving attributes of titanium coupled with improved wear resistance, resulting in a light weight landing gear which has a long operational period before maintenance, repair and/or overhaul is required. A light weight landing gear can also result in less fuel consumption during the operation of the aircraft. The present inventor also found that fitting a non-titanium sleeve can be relatively simple and time efficient, especially during a retrofitting or maintenance, repair and/or overhaul process.

According to a second aspect of the invention, there is provided a method of manufacturing an aircraft landing gear shock absorbing strut, the method comprising the steps of:
providing a casing formed from titanium and including a wall portion defining a first bore which is open at a first axial face of the casing;
fitting a non-titanium tubular sleeve within the first bore, the tubular sleeve having a sleeve wall which defines a second bore that is open at the first axial face of the casing, the sleeve wall being thinner than the wall portion of the casing;
slidably housing a first end region of a sliding tube within the second bore, the first end region defining a piston, the sliding tube having a second end region which projects from the first axial face of the casing so that the sliding tube can move axially relative to the casing between a compressed shock absorber condition and an extended shock absorber condition, the first end region of the sliding tube being provided with a first bearing which defines a first bearing surface arranged in sliding contact with the sleeve; and
coupling a second bearing to the casing within the first bore, the second bearing surface arranged for sliding contact with the sliding tube, the second bearing being situated closer to the first axial face of the casing in comparison to the first bearing.

The following optional features of the invention apply to both the first aspect and the second aspect.

The sleeve can comprise a metal other than titanium; for example, stainless steel (e.g. 15-5PH per AMS5659), aluminium nickel bronze (e.g. per AMS4880), or other non-metallic materials such as composites.

Alternatively, the sleeve can comprises a composite polymer reinforce with fibre. The fibre can be carbon fibre, metal fibre or other strong synthetic fibre.

The sleeve can be statically coupled to the casing within the first bore; for example, by way of an interference fit, mechanical fixing or bonding.

The sleeve can be directly adjacent to the casing in that substantially no gap exists between the sleeve and the casing.

The sleeve wall can have a uniform thickness along some or all of its length.

The thickness of the sleeve wall can be less than half the thickness of the casing wall and preferably less than a quarter or an eighth of the thickness. The wall thickness of the sleeve wall can for example be between 1.5mm and 2mm and the casing wall thickness can be between 10mm and 12mm.

The sleeve material can have similar thermal expansion coefficient to titanium. This allows the sleeve and the casing to thermally expand together, protecting the strut from damage due to thermal changes. Some examples of suitable material are stainless steel and aluminium bronze.

According to a third aspect of this invention there is provided an aircraft comprising an aircraft landing gear shock absorbing strut according to the first aspect.

These and other aspects of the present invention will become apparent from, and clarified with reference to, the embodiments described herein.

### Brief Description of the Drawings

Embodiments of the present invention will now be described, by way of example only, with reference to the accompanying drawings, in which:
Figure 1 is a diagram of an aircraft landing gear shock absorber strut according to an embodiment of the invention; and
Figure 2 is a block diagram of a method of manufacturing an aircraft landing gear shock absorber strut according to an embodiment of the invention.

### Specification Description of Embodiments of the Invention

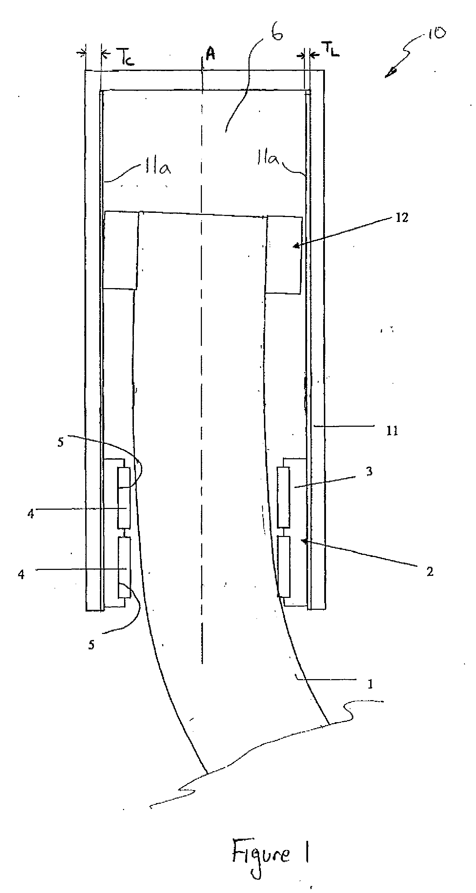

Figure 1 shows a shock absorber strut 10 of an aircraft landing gear assembly. The shock absorber strut 10 includes a casing 11 within which a sliding tube 1 is slidably mounted.

The casing 11 includes a wall portion which defines an internal chamber or first bore. A sleeve 11a is provided within the first bore. The sleeve 11a defines a second bore 6 containing shock absorber fluid which provides spring and damping characteristics in a conventional manner. The shock absorber strut 10 can for example be an oleo-pneumatic shock absorber having a compression chamber often divided by a floating piston (not shown) into a first space containing gas, such as nitrogen, and a second space containing oil. When the aircraft lands, the shock absorber strut 10 is compressed, reducing the volume of the compression chamber and, in doing so, compressing the gas. This provides the shock absorbing spring function. Damping is provided by the oil moving through damping orifices (not shown).

The top or first end of the tube 1 defines a piston. The tube 1 is supported by upper and lower bearing assemblies 2 and 12 within the cylindrical internal chamber 6 of the casing 11. The sliding tube 1 is arranged to be coupled to a wheel or wheeled bogie at its lower or second end.

The upper bearing assembly 12 can be attached to the sliding tube such that it slides within the second bore.

The lower bearing assembly 2 is fixed within the lower end of the casing 11 and the sliding tube 1 is free to slide axially within the lower bearing assembly 2. The lower bearing can be directly coupled to the casing 11 or coupled to it via the sleeve 11 a. Thus, the sleeve need not extend all the way down to the opening in the bottom or first axial face of the casing.

In use, forces applied to the wheel or wheeled bogie in taxi, take-off or landing modes will create a lateral deflection of the tube 1. The lower bearing assembly consists of a bearing housing 3 that supports within it two identical plain bearing rings 4 spaced axially apart and each received in a respective groove 5 of identical depth in the inner surface of the housing 3. However, in other embodiments one or more upper and/or lower bearings can be provided.

The bearing rings 4 can be split rings and are a snap-fit in the grooves 5.

The casing 11 is formed from titanium in a conventional manner; for example, machining a billet into the desired shape. The term titanium is used to encompass titanium or a titanium alloy or titanium fibres in a polymer or metal matrix. Any suitable titanium or titanium alloy can be used for the casing 11; for example, Ti-10V-2Fe-3Al (Ti 10-2-3).

In the illustrated embodiment, a non-titanium sleeve 11a has been provided within the first bore. The sleeve 11a can increase the hardness of the upper bearing counter-face without significantly increasing the weight of the shock absorber strut because the sleeve 11a is thinner than the wall portion of the casing 11. The sleeve 11a and the casing 11 have the same axis of symmetry A.

The tubular sleeve can comprise non-titanium metal such as stainless steel (e.g. 15-5PH per AMS5659), aluminium nickel bronze (e.g. per AMS4880), or other non-metallic materials such as fibre reinforced composites.

Alternatively, the tubular sleeve can comprise polymer material such as PTFE and/or fibre reinforced polymer such as carbon fibre composite and/or ceramic material. The sleeve material can comprise the same material to the non-metalic bearing material.

The thickness of the casing wall Tc can for example be 10mm - 12mm and thickness of the sleeve wall T_{L} can be 1.5mm to 2mm.

However in other embodiments the thickness T_{L} of the sleeve wall can be less than half the thickness T_{C} of the casing wall and preferably less than a quarter of the thickness and even more preferably less than a quarter or around an eighth of the thickness. This can result in a light weight landing gear which has a long operational period before maintenance, repair and/or overhaul is required. A light weight landing gear also enables less fuel consumption during the operation of the aircraft.

The bearings of the upper bearing assembly 12 and/or lower bearing assembly 2 can be formed from any conventional metallic or non-metallic material. For example, aluminium bronze bearings, such as composite, can be used with a stainless sleeve or composite sleeve. Alternatively, polymer or fibre reinforced composite bearings can be used with a stainless steel, aluminium bronze or non-metallic sleeve.

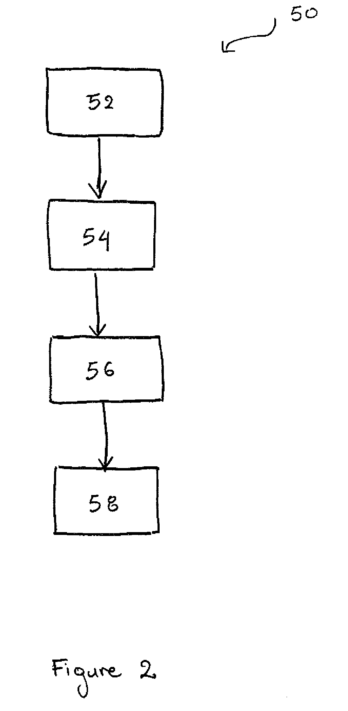

Referring to figure 2, a method 50 of manufacturing an aircraft landing gear shock absorbing strut according to an embodiment of the invention is depicted.

At step 52 a casing is provided, which is formed from titanium and includes a wall portion defining a first bore which is open at a first axial face of the casing.

At step 54 a non-titanium tubular sleeve is fitted within the first bore of the casing. The tubular sleeve has a sleeve wall which defines a second bore that is open at the first axial face of the casing, similar to the first bore of the casing. The sleeve wall is thinner than the wall portion of the casing.

Fitting the tubular sleeve inside the casing can be archived by any known means such as "shrink fitting" or thermal expansion to provide an interference fit, mechanical fixings and/or bonding.

The sleeve can be manufactured and fitted during manufacturing and assembly of an aircraft landing gear, or as part of an MRO procedure where the sleeve replaces a worn sleeve or bare titanium inner surface of a casing.

At step 56 a first end region of a sliding tube is slidably housed within the second bore of the tubular sleeve. The first end region of the sliding tube defines a piston. The sliding tube also has a second end region which projects from the first axial face of the casing. The sliding tube can move axially relative to the casing between a compressed shock absorber condition and an extended shock absorber condition. The first end region of the sliding tube is provided with a first bearing which defines a first bearing surface arranged in sliding contact with the sleeve.

At step 58 a second bearing is coupled to the casing within the first bore of the casing. The second bearing surface is arranged in sliding contact with the sliding tube. The second bearing is also situated closer to the first axial face of the casing in comparison to the first bearing.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parenthesis shall not be construed as limiting the claims. The word "comprising" does not exclude the presence of elements or steps other than those listed in any claim or the specification as a whole. The singular reference of an element does not exclude the plural reference of such elements and vice-versa. Parts of the invention may be implemented by means of hardware comprising several distinct elements. In a device claim enumerating several parts, several of these parts may be embodied by one and the same item of hardware. The mere fact that certain measures are recited in mutually different dependent claims does not indicate that a combination of these measures cannot be used to advantage.

## Claims

1. An aircraft landing gear shock absorber strut comprising:
a casing (11) formed from titanium and including a wall portion defining a first bore (6) which is open at a first axial face of the casing;
a non-titanium tubular sleeve (11a) fitted within the first bore, the tubular sleeve having a sleeve wall which defines a second bore that is open at the first axial face of the casing, the sleeve wall being thinner than the wall portion of the casing;
a sliding tube (1) having a first end region defining a piston which is slidably housed within the second bore and a second end region which projects from the first axial face of the casing so that the sliding tube (1) can move axially relative to the casing between a compressed shock absorber condition and an extended shock absorber condition, the first end region of the sliding tube (1) defining a first bearing (12) having a first bearing surface arranged in sliding contact with the sleeve; and
a second bearing (4) coupled to the casing within the first bore and having a second bearing surface arranged for sliding contact with the sliding tube, the second bearing being situated closer to the first axial face of the casing in comparison to the first bearing.

2. An aircraft landing gear shock absorber strut according to claim 1, wherein the sleeve comprises a metal other than titanium.

3. An aircraft landing gear shock absorber strut according to claim 1 or 2, wherein the sleeve is statically coupled to the casing within the first bore.

4. An aircraft landing gear shock absorber strut according to any preceding claim, wherein sleeve wall is of uniform thickness.

5. An aircraft landing gear shock absorber strut according to any preceding claim, wherein thickness of the sleeve wall is less than half the thickness of the casing.

6. An aircraft comprising an aircraft landing gear shock absorbing strut according to any claim 1 to 5.

7. A method of manufacturing an aircraft landing gear shock absorbing strut, the method comprising the steps of:
providing a casing formed from titanium and including a wall portion defining a first bore which is open at a first axial face of the casing;
fitting a non-titanium tubular sleeve within the first bore, the tubular sleeve having a sleeve wall which defines a second bore that is open at the first axial face of the casing, the sleeve wall being thinner than the wall portion of the casing;
slidably housing a first end region of a sliding tube within the second bore, the first end region defining a piston, the sliding tube having a second end region which projects from the first axial face of the casing so that the sliding tube can move axially relative to the casing between a compressed shock absorber condition and an extended shock absorber condition, the first end region of the sliding tube being provided with a first bearing which defines a first bearing surface arranged in sliding contact with the sleeve; and
coupling a second bearing to the casing within the first bore, the second bearing having a second bearing surface arranged for sliding contact with the sliding tube, the second bearing being situated closer to the first axial face of the casing in comparison to the first bearing.

8. A method according to claim 7, wherein the sleeve comprises a metal other than titanium.

9. A method according to claim 7 or 8, wherein the sleeve is statically coupled to the casing within the first bore.

10. An aircraft landing gear shock absorber strut according to claims 7 to 9, wherein sleeve wall is of uniform thickness.

11. A method according to claim 7 to 10, wherein thickness of the sleeve wall is less than half than the thickness of the casing wall.
